# EUROPEAN PATENT SPECIFICATION

(11) **EP 2 497 079 B1**
(45) Date of publication and mention of the grant of the patent: **21.01.2015**
(21) Application number: 10785195.8
(22) Date of filing: 28.10.2010
(51) Int. Cl.: B26F 1/38, B26F 3/00, G09F 13/04, G08G 1/095, G09F 13/18, G02B 6/00, F21V 8/00

(54) **LUMINOUS ELEMENT, PROCESS AND SYSTEM FOR MAKING IT AND CORRESPONDING DEVICES OBTAINED WITH SAID ELEMENT**
LEUCHTKÖRPER, VERFAHREN UND VORRICHTUNG ZU SEINER HERSTELLUNG UND AUS DIESEM KÖRPER HERGESTELLTE VORRICHTUNGEN
ÉLÉMENT LUMINEUX, PROCÉDÉ ET DISPOSITIF POUR SA FABRICATION ET DISPOSITIFS OBTENUS À PARTIR DE CET ÉLÉMENT

(30) Priority: 04.11.2009 IT VI20090269
(43) Date of publication of application: 12.09.2012
(73) Proprietor: NOVA PUBBLICITA' SRL, 36040 Meledo di Sarego (VI) (IT)
(72) Inventor: DAL CAVALIERE, Pierino, I-36040 Brendola (VI) (IT)
(74) Representative: Ziliotto, Tiziano
(86) International application number: PCT/IB2010/002793
(87) International publication number: WO 2011/055211

(56) References cited:
- EP-A2- 0 717 236
- WO-A2-2008/056254
- DE-A1- 10 037 642
- JP-A- 10 288 968
- JP-A- 2004 184 947

## Description

The present invention relates to the sector of lighting techniques.

In particular, the present invention relates to the technical field of luminous and/or lighting elements that are suited to constitute illuminated elements to be used in the sector of furniture and also in other sectors.

More particularly, the present invention can be usefully applied to elements for making illuminated signs or furniture accessories (lamps, household ornaments, illuminated pictures, luminous panels) or road signs.

More precisely, the invention concerns an element to be used for making signs or road sign elements, in particular illuminated signs, as well as a process for manufacturing said element with a corresponding system and the sign obtained therewith.

### DESCRIPTION OF THE STATE OF THE ART

Elements for making illuminated signs are known in the art.

In the known solutions for making some types of signs (for example signs with company names and trade names) luminous and/or lighting elements are used which are suited to reproduce characters such as letters, numbers, symbols and the like.

These lighting elements for making signs of the known type comprise a box-shaped body that is open at the front and a transparent or translucent (generally coloured) closing element that is suited to close said opening and to allow light to pass from the inside towards the outside of the box-shaped body. Said box-shaped body comprises one or more side faces (perimeter faces) that delimit the perimeter of the element and a back face (bottom face).

The box-shaped body, which is structured so as to reproduce the character to be represented, is open at the front (visible face) in order to allow the light sources to be housed therein and the light to pass. In fact, inside said box-shaped body there are the lighting devices and the lamps, typically constituted by fluorescent neon tubes, whose light is emitted from the visible front face passing through the closing element. Said closing element is also suited to enhance the aesthetic value of the sign.

According to the known solutions, the sign is illuminated by neon lamps that rest against the back face of the element.

The element or sign is thus constituted by a sealed unit that therefore is suited to be installed even outdoors and is resistant to atmospheric agents.

The box-shaped body mentioned above is put together with substantially manual operations.

In particular, the side surface of said body is obtained in more than one step, working and properly bending with bare hands one or more metal sheets in order to shape them as desired, and then securing said sheets to the closing element at the level of its edge by welding and tinning.

The known solutions are based on the general consideration that the light sources must be arranged on the back wall and facing the closing element in order to obtain maximum efficiency in terms of sign luminosity, and furthermore on the fact that the light sources must be properly spaced from the closing element in order to be able to illuminate the latter in a homogeneous manner.

However, it should be noted that the elements and the signs of the type described above involve various problems; for example, they must have overall dimensions not below a given minimum due to the position of the neon lamps that, as explained above, are located on the back wall of the box-shaped body and must be arranged at a given minimum distance from the closing element in order to allow the light to diffuse inside the volume of the box-shaped element (as defined by its side and back walls) and to illuminate the closing element in a homogeneous manner. If said minimum distance is not respected, the illuminated sign will have a closing element whose light intensity is not homogeneous (different light intensity in the different parts of the closing element). In this configuration (for example with the neon lamp resting on or too near the closing element) the sign will have more or less illuminated areas and/or shady areas that make it scarcely interesting for the market. The above clearly shows that the thickness of the sign, that is, the distance between its back wall and the closing element, cannot be less than a given value, depending on the characteristics of the light sources used. This, as already explained above, represents a considerable limitation for the sign itself.

A further drawback, typical of the signs of known type, is constituted by the fact that execution times and costs are considerable and sometimes difficult to quantify.

A further drawback of the known solutions lies in that the procedures for making the sign element or the sign do not allow products with homogeneous quality standards and repeatable characteristics to be obtained.

Another drawback of the known solutions lies in that the materials used for making the bodies of the sign elements, like copper, brass, steel, aluminium, galvanized plate are very expensive and subject to the fluctuations of international markets.

Another drawback of the known solutions is constituted by the fact that the lighting of the sign elements is obtained by means of fluorescent neon tubes, whose energy consumption is high and whose performance levels rapidly worsen over time, so that routine maintenance is required.

A further drawback of the known solutions lies in that these elements are rather heavy and fragile, so much that they are difficult to transport and install, which often causes failures and breakages.

It is therefore evident from the above that there is the need to identify alternative solutions which are more functional than the known solutions.

In view of the situation described above, a luminous and/or lighting element which overcomes or at least limits the drawbacks posed by the known art would be desirable. It is therefore desirable to provide a lighting element (particularly suited to make an illuminated sign), a sign, a procedure for making it, as well as devices manufactured with this lighting element which overcome the drawbacks found in the known elements, in particular in the signs and the processes for making them described above.

Further examples of luminous elements according to the prior art are known from documents DE 10037642A1, EP 0717236 A2 and WO 2008/056254 A2.

The main object of the present invention is thus to solve or at least partially overcome the problems that characterize the solutions known in the state of the art.

In particular, it is an object of the present invention to propose a solution that makes it possible to produce an element to be used for making signs, in particular illuminated signs, as well as a process for manufacturing said element and a corresponding sign that allow the drawbacks described above to be overcome, as well as some devices made using said lighting element.

More particularly, it is a first object of the invention to provide a lighting element that is particularly compact and light, easy to install (also on a shop window) even by inexpert personnel (for example shop assistants).

It is a further object of the invention to make an illuminated sign structured in such a way that light can be transmitted in a homogeneous manner at least on the front visible surface.

It is another object of the invention to make a lighting element that consumes less than the known elements, in particular illuminated signs, having comparable luminosity characteristics.

It is another object of the invention to make an element for signs with smaller overall dimensions than the elements for signs of known type having comparable luminosity characteristics, and in particular it is an object of the invention to make an element for signs and a sign whose thickness (distance between the back wall and the closing element) is less than the thickness of the comparable known solutions.

It is a further object of the invention to propose a process for making a luminous and/or lighting element, preferably for illuminated signs, that can be reproduced in series guaranteeing the same characteristics of the elements produced (mass reproducibility).

It is another object of the invention to propose a process that can be implemented also automatically, with no need for the intervention of a specialized operator, at the same time guaranteeing the quality and aesthetic characteristics of an handmade product of known type.

It is a further object of the invention to develop a method for making a lighting element, preferably for signs, and/or a sign that make it possible to obtain elements having the same characteristics obtained with the known manual techniques, with no need for the intervention of a specialized worker.

It is another yet not the least object of the invention to carry out a lighting element that, though having the same characteristics, is lighter than the elements created with the known techniques.

It is another object of the invention to implement a process and a corresponding system that drastically reduce the time needed to produce the element for signs, minimizing and even eliminating the need for specialized labour and thus minimizing production costs.

It is a further aim of the invention to implement a process and a system that ensure standardized production of the element in terms of quality, delivery times, production capacity and production costs.

It is a further object of the invention to implement a process that eliminates pollution and the use of dangerous materials.

It is another, yet not the least object of the invention, to carry out a lighting element and a corresponding sign having any shape and degree of complexity, economic, easy to construct and to assemble, easy to install, suited also for mass production, as well as a process and a system for the manufacture of such an element and a corresponding sign.

### SUMMARY OF THE PRESENT INVENTION

The present invention is based on the general consideration that it is possible to considerably reduce the overall dimensions of the luminous and/or lighting element by arranging the light emitting means or lighting means in a suitable position inside the box-shaped body.

A further consideration on which the present invention is based concerns the fact that the light generated by the light emitting means can be properly diffused and/or directed towards the illuminated surfaces of the lighting element (for example, the closing element in the case of a sign) by providing a diffuser element suited to properly deviate the light produced by said light emitting means towards the surfaces to be lit.

A further consideration on which the present invention is based concerns the fact that by providing reflecting surfaces inside the element it is possible to further improve the efficiency of the element itself in terms of luminosity.

A further consideration on which the present invention is based concerns the fact that it is possible to provide an element that with the same overall dimensions can have illuminated surfaces having substantially the same characteristics in terms of luminosity and can face and/or be parallel to each other.

A further consideration on which the present invention is based concerns the fact that by properly choosing the materials of which the substrate (or main body) of the lighting element is made it is possible to obtain particular characteristics of luminosity.

According to a first embodiment, the present invention concerns a luminous element as claimed in claim 1.

The inner surface delimits an inner volume of said lighting element.

Said solution advantageously makes it possible to reduce the thickness of the lighting element to a minimum, as the thickness can substantially correspond to the dimensions of the light emitting means.

According to the claimed solution the light emitting means are fixed to the inner (side) surface.

Still according to the claimed invention, said element also comprises light diffusion means (for the light radiation emitted by said light emitting means) suited to direct light so that it exits from said cavity through said at least one surface to be lit, said light diffusion means being housed in said cavity.

It is thus clear that the device carried out according to the present invention makes it possible to considerably reduce the overall dimensions of the element for signs, while at the same time guaranteeing homogeneous lighting of the surface to be lit (visible exposed surface).

Further advantageous embodiments of the present invention are described in detail in the dependent claims.

Still according to the claimed invention, said light diffusion means comprise a sheet made of a transparent material. Said sheet faces said surface to be lit and substantially extends over the whole area delimited by the side walls of the main body. It is thus clear that the solution proposed according to the present invention advantageously makes it possible to maintain especially contained overall means.

Still according to the claimed invention, said sheet has preferably superficial cuts on at least one of its faces.

It is thus clear that the solution proposed according to the present invention makes it also possible to considerably increase the uniform diffusion of light on the whole surface to be lit (visible exposed surface) of the element for signs.

Still according to the claimed invention, said surface cuts consist of a plurality 30 of parallel rectilinear grooves.

Still according to the claimed invention, said surface cuts consist of a plurality of rectilinear grooves parallel and orthogonal to each other.

According to another embodiment, the subject of the present invention is a luminous and/or lighting element in which said main body if made of a polymer.

According to a further embodiment, the subject of the present invention is a luminous and/or lighting element in which said substrate or main body is obtained through chip removal processes (for example through CNC milling) from a sheet of homogeneous material (preferably a polymer), reducing execution costs and times and at the same time allowing any geometrical shape to be obtained.

According to another embodiment, the subject of the present invention is a luminous and/or lighting element in which said polymer comprises a resin in turn comprising a polyurethane foam.

According to a further embodiment, the subject of the present invention is a lighting element in which said polymer comprises polyvinyl chloride PVC or polymethylmethacrylate PMMA or is extruded or cast or foam.

According to a further embodiment, the subject of the present invention is a lighting element in which said lighting means comprise at least one LED and/or at least one fluorescent tube and/or at least one incandescent lamp.

The above clearly shows that the solution proposed according to the present invention advantageously allows also the use of LEDs and therefore makes it possible to considerably reduce energy consumption and to further reduce the overall dimensions of the lighting element.

According to another embodiment, the subject of the present invention is a lighting element that is closed also at the back.

According to a further embodiment, the subject of the present invention is a lighting element in which said one groove extends over the entire thickness of the substrate, in such a way as to create a through opening. In this case the lighting element comprises two surfaces to be lit, preferably parallel to each other. According to a further embodiment, the subject of the present invention is a lighting element in which at least one of said one or more walls is vertical and/or oblique.

According to another embodiment, the subject of the present invention is a sign comprising at least one element for signs constructed according to the description provided above.

The above shows, therefore, that the use of said types of elements makes it possible to obtain signs that are particularly light and thin compared to the known signs having comparable if not superior luminosity characteristics.

According to a further embodiment, the subject of the present invention is an illuminated sign comprising one or more lighting elements arranged in such a way as to form a pattern having a predefined shape, at least one of said lighting elements being carried out according to any one of the embodiments described above.

According to a further embodiment, the subject of the present invention is an illuminated road sign comprising one or more lighting elements arranged in such a way as to form a pattern having a predefined shape, at least one of said lighting elements being carried out according to any one of the embodiments described above.

According to a further embodiment, the subject of the present invention is a set of traffic lights comprising one or more lighting elements arranged in such a way as to form a pattern having a predefined shape, at least one of said lighting elements being carried out according to any one of the embodiments described above.

According to a further embodiment, the subject of the present invention is an illuminated furniture accessory comprising one or more lighting elements arranged in such a way that at least one of said lighting elements being carried out according to any one of the embodiments described above.

There is described a process for making a luminous and/or lighting element comprising the following operations:
- defining the desired shape of the element for signs;
- engraving and cutting out from a sheet made of a polymer the main body of said luminous element, preferably using automatic machine tools like for example a milling machine, said main body at least partially delimiting the perimeter of said element and comprising an inner side surface;
- fixing light emitting means to said inner side surface;
- fixing at least one closing element to said main body.

It is thus clear that the solution proposed according to the present invention advantageously allows the element for signs to be easily and quickly constructed in any geometric shape desired. In fact, the operator can choose the desired geometric shape on his/her PC (for example with a CAD application) and then, always with his/her PC, generate the commands necessary to operate the tool that will remove the excess material from the sheet, thus obtaining the main hollow body with the desired shape and size.

**There is also described** a process in which said machine tool is a milling machine.

**There is also described** a system for making a lighting element, comprising a control unit through which the operator sets the shape of a sign element in advance, said unit being suited to control means for cutting out at least the profile of the main body of said sign element from a sheet made with a polymer.

**Further** described is a system in which said control unit moves said means for cutting out at least the profile of said main body along at least three axes orthogonal to each other, wherein said means for cutting out at least the profile of said main body comprise a milling cutter and/or a water jet or a laser ray.

**Further described** is a system in which said control unit comprises operator interface means that make it possible to control and set the operating parameters of said system, and wherein said control unit also comprises storage means suited to store at least one shape of a sign element with the relevant system operating parameters, said at least one shape of a sign element with the relevant system operating parameters being able to be recalled by the operator.

The above clearly shows that the solution proposed according to the present invention advantageously allows the element details to be set and defined even by non expert personnel that can obtain information even from a data bank provided in the control unit, where the geometrical details of the element for signs and the sheet processing specifications are stored.

### BRIEF DESCRIPTION OF THE DRAWINGS

Further advantages, objects and characteristics, as well as further embodiments of the present invention, are defined in the claims and will be illustrated in the following description, with reference to the enclosed drawings; in the drawings, corresponding or equivalent characteristics and/or components are identified by the same reference numbers. In particular:
- Figure 1a shows a perspective view of an example of embodiment of a luminous and/or lighting element carried out according to the invention;
- Figure 1b shows an exploded perspective view of the element shown in Figure 1a;
- Figure 1c shows a plan view of a part of the element of Figure 1a;
- Figure 1d shows a plan view of another part of the element of Figure 1a;
- Figure 2a shows a perspective view of another example of embodiment of a luminous and/or lighting element carried out according to the invention;
- Figure 2b shows an exploded perspective view of the element shown in Figure 2a;
- Figure 2c shows a plan view of a part of the element of Figure 2a;
- Figure 2d shows a plan view of another part of the element of Figure 2a;
- Figure 2e shows a plan view of the two parts shown in Figures 2c and 2d, assembled together;
- Figure 2f shows an exploded view of a cross section along plane A-A of the lighting element of Figure 2a;
- Figure 2g shows a view of a cross section along plane A-A of the lighting element of Figure 2a;
- Figure 3 shows a perspective view of another example of embodiment of a luminous and/or lighting element carried out according to the invention;
- Figure 4a shows a plan view of another example of embodiment of a luminous and/or lighting element carried out according to the invention, in the form of an illuminated road sign;
- Figure 4b shows a side view of another example of embodiment of a lighting element carried out according to the invention, used to make a set of traffic lights;
- Figure 5 shows a plan view of an example of embodiment of a sign which is also the subject of the invention;
- Figure 6a shows a schematic perspective view of a system for making a lighting element and/or a sign, which is also the subject of the invention;
- Figures 6b, 6c and 6d show a corresponding number of working steps for the manufacture of a lighting element of the type shown in detail at the bottom of Figure 6d.

### DETAILED DESCRIPTION OF THE PRESENT INVENTION

By way of introduction, it is important to point out that corresponding components in different examples of embodiment are indicated by the same reference numbers.

In the case of a change in the position of the parts that make up the invention, the position indications given in the individual executive examples must be transferred, according to logic, to the new position.

It is also important to underline that, for a better understanding of the schematic diagrams attached, some parts of the non-limiting examples of embodiment shown have been hatched.

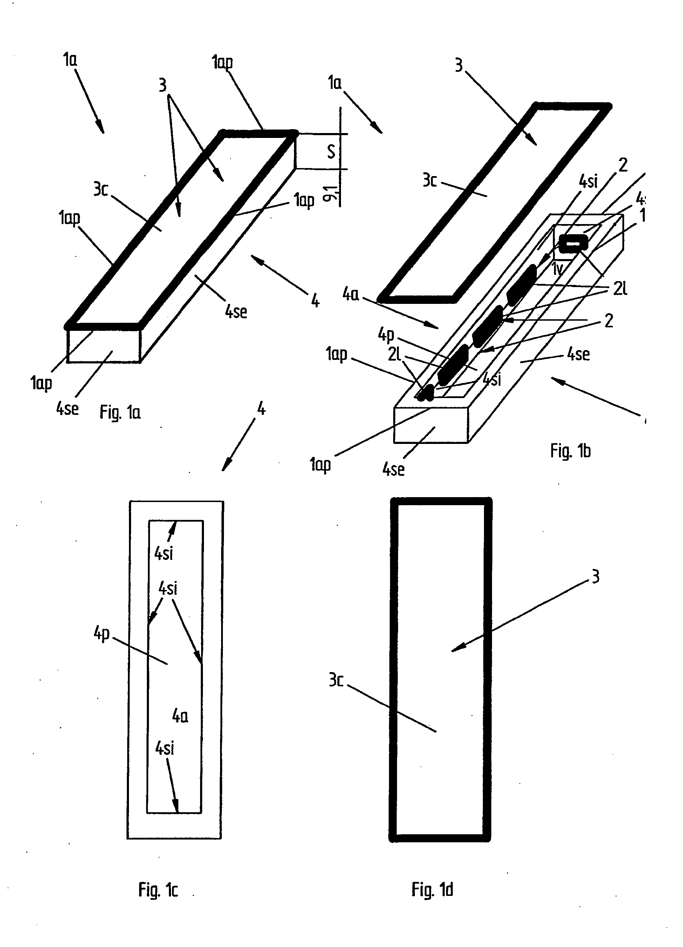

While the following description, made with reference to the figures, illustrates some particular embodiments of the present invention, it is clear that the invention is not limited to said particular embodiments, rather, the individual embodiments described here below clarify different aspects of the present invention, the scope and purpose of which are defined in the claims. More particularly, while the figures and the corresponding detailed description refer to an element for an advertising sign, it is clear that the proposed solution can be adopted also for making other lighting elements, like for example a lighting element for road signs or an illuminated furniture element (illuminated from the inside) in general (an illuminated picture, a lamp or a furniture accessory). According to a first embodiment, the subject of the present invention is a luminous and/or lighting element (in the case at hand an element for signs) indicated as a whole by reference number 1a in the Figures from 1a to 1d. The lighting element 1a comprises light emitting means 2 (or lighting means) visible in Figure 1b, at least one visible surface to be lit belonging to a closing element 3, and a substrate or main body 4 that delimits the side perimeter lap of the element 1a. The substrate or main body 4 is provided with a groove 1v having an inner side wall or surface 4si that extends over the thickness of the substrate 4 to define a cavity and an outer side surface 4se, as well as a rear wall 4p. Said rear wall 4p can be made of a transparent or translucent material, as will be better explained below. The light emitting means 2 (or lighting means) are arranged so that they face the inner side surface 4si. More particularly, in the example shown the lighting means 2 are constituted by low voltage LEDs 21 (for example 12v or 24v LEDs) fixed to the inner side wall 4si.

Said solution advantageously makes it possible to reduce the thickness S of the lighting element 1a to a minimum. In fact, thanks to the proposed solution, the thickness S can be substantially reduced so as to be equal to the size of the light emitting means 2 or of the LEDs 31, in the example shown.

Thus, the light emitting means 2 are not facing the surface to be lit, rather, they are arranged on a plane that is substantially and preferably orthogonal to the surface to be lit. Said light emitting means 2 thus rest against one of the above mentioned walls and emit light mostly towards the inside of the cavity (or volume) 1v.

In particular, in Figure 1c (plan view of the main body 4 of the element 1a shown in Figure 1a) it is possible to observe that the LEDs are arranged so that they are not frontally visible from the opening 4a of the main body 4.

This can be obtained also by making seats or housings on the inner surface 4si of the substrate or main body 4, said seats being suited to accommodate and house the light emitting means 2 (said solution can be applied to all the embodiments described herein and protected by the present patent application).

As explained above, in the preferred non-limiting embodiment of the invention illustrated herein, the light emitting means are constituted by LED modules, in particular strip modules, powered at 12 or 24 volts. The LED module has a size of approximately 8 mm. The LEDs preferably occupy all the inner perimeter surface 4si of the substrate or main body.

Figure 1d shows a plan view of the closing element 3c (or front or visible element) of the element 1a of Figure 1a. Said closing element 3c is generally transparent or translucent. More particularly, said closing element 3c is preferably constituted by an opaline or coloured methacrylate sheet. The thickness of the above mentioned opaline or coloured methacrylate sheet can vary preferably between 2 mm and 4 mm. Said closing element 3c is applied to the main body 4 so as to seal the inside of the element 1a, preventing external agents like for example water from getting in and allowing the element 1a to be installed even outdoors. The sheet can be applied to the substrate or main body 4 using connection means of known type, like for example screws, bonding agents or other known systems.

A further embodiment of the element carried out according to the present invention is described here below with reference to Figures from 2a to 2g; in Figures from 2a to 2d components and/or characteristics that have already been described with reference to the previous figures are identified by the same reference numbers.

More particularly, according to a further embodiment, the subject of the present invention is a lighting element (in the case at hand an element for signs) indicated as a whole by 1b in Figures from 2a to 2d and differing from the previous embodiment due to the fact that it also comprises means 5 for the diffusion of the light radiation emitted by said lighting means 2, said diffusion means 5 being suited to diffuse the light radiation generated by said light emitting means 2 and/or to direct and/or to deviate it so that it exits from the cavity 1v through at least one of the surfaces to be lit 3 of the lighting element 1b.

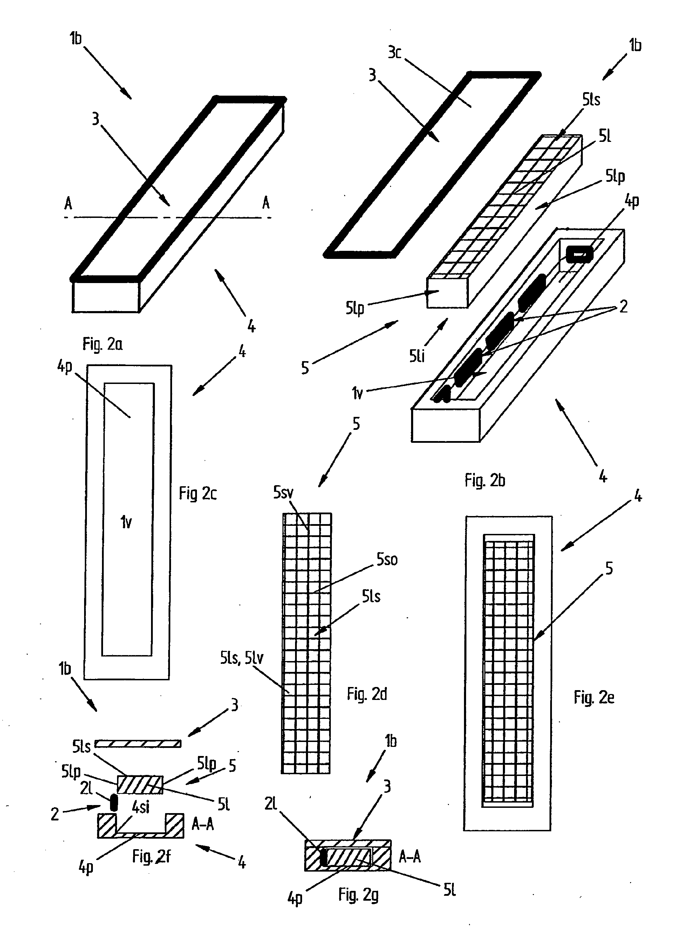

The above mentioned light diffusion means 5 are arranged inside the volume or cavity 1v defined by the inner perimeter surface 4si of the main body 4 (hollow body) and under the closing element 3c. More particularly, said light diffusion means 5 preferably comprise a sheet 51 in cast transparent methacrylate with thickness preferably included between 3 mm and 30 mm. More particularly, the sheet 51 has side walls 51p suited to face the lighting means 2 (LED), a first upper wall 51s suited to face the closing element 3c and a second wall 51i facing the back wall 4p of the main body 4. The shape of the sheet 51 substantially corresponds to the shape of the lighting element 1b and develops so as to substantially face and extend over the entire surface to be lit. In particular, Figures 2c and 2d respectively show an elevation view of the substrate or main body 4 and the sheet 51, while Figure 2e shows the sheet 51 inserted inside the substrate or main body 4 (inside the volume 1v). Figures 2f and 2g show a section view along plane A-A of the lighting element of Figure 2a, in which it is possible to observe the position of the various parts making up the lighting element **1b** as well as the reduced size of the element itself (in terms of thickness) and the presence of the LEDs 21 only on part of the wall 4si of the substrate 4. This can be made because it is possible to exploit the reflection of the portion opposite the wall 4si of the substrate 4 against which the LED 21 rests. This is achieved in particular when PVC (preferably semi-expanded PVC foam) is used to make the substrate 4 (it should be noted that this solution can be applied to all the embodiments that are the subject of the invention). Said solution makes it possible to reduce the cost of the lighting element. It is clear, however, that alternatively the LEDs can substantially occupy the entire surface/s 4si. It should also be noted that according to the preferred embodiment of the invention described herein the surface 51s of the sheet 51 is provided with cuts. More precisely, said cuts consist of a crossing of rectilinear cuts (grooves) 5so and 5sv. More precisely, in the example shown, said grooves develop on two series of parallel and equally spaced straight lines 5so and 5sv, which intersect to form a grid pattern. Said cuts can advantageously be made by laser (the laser technique advantageously allows the thickness of the grooves to be precisely controlled) and can comprise even one series only of parallel and preferably equally spaced grooves, or more than two series of preferably parallel and equally spaced grooves that intersect each other according to predetermined angles.

It should also be noted that said cuts can be present on both the upper surface 51s and the lower surface 51i of the sheet 5.

As explained above, said cuts are preferably made using a laser technique but they can also be obtained with other known systems. Alternatively to the surface cuts through openings may be provided, whose cross section and size will vary depending on the effects to be obtained (this solution applies to all the lighting elements described in this patent application).

Said cuts advantageously make it possible to transmit and guide the light radiation emitted by the light emitting means 2 and diffuse it over the entire surface 51s of the sheet 51, thus advantageously obtaining uniform and/or homogeneous lighting of the whole surface to be lit 3 of the element for signs 1b. It is clear that according to the distance between the grooves and their width and depth, as well as to their direction, different light diffusion on the surface of the element will be obtained. This advantageously makes it possible to create areas with higher or lower luminosity according to the needs and the effects desired.

It has also been observed that the light diffusion element 5 advantageously makes it possible to reduce the number of light sources (for example LEDs) to be used to illuminate the element **1b**.

It should also be noted that the space between the inner walls 4si of the main body 4 and the side walls 51p of the sheet 5 make it possible to house the light emitting means 2 constituted also in this case by LEDs (as in the example of Figures from 1a to 1d).

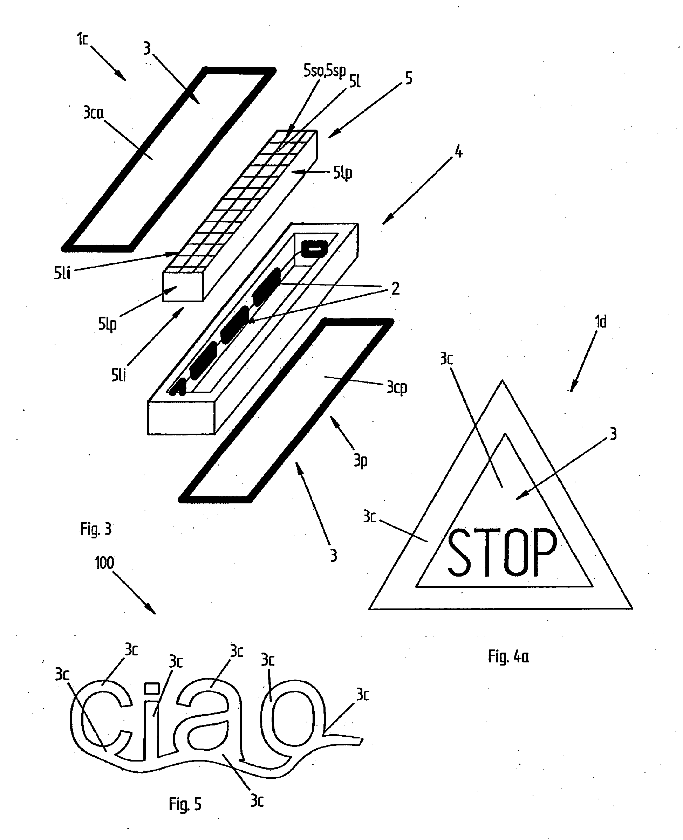

A further embodiment of the element carried out according to the present invention is described here below with reference to Figure 3, in which components and/or characteristics that have already been described with reference to the previous figures are identified by the same reference numbers. More precisely, the sign element 1c shown in Figure 3 differs from the embodiment shown in Figures from 2a to 2e due to the fact that the substrate or main body 4 is not provided with the back wall 4p that is replaced by a further surface to be lit 3p defined by a second closing element 3cp. More particularly, in this embodiment the groove extends over the entire thickness of the main body or substrate 4, in such a way as to create a through opening.

Advantageously, in this embodiment the light diffusion means 5 comprise a sheet 51 that is provided on both its surfaces 51s and 51i, respectively the upper and the lower surface, with said grooves or cuts suited to diffuse light on all the surfaces 51s and 51i of the sheet 51, thus homogeneously lighting the two closing elements 3ca and 3cp. It should be observed that, advantageously, the proposed solution makes it possible to produce an illuminated element having thickness (overall dimensions) equal to the possible thickness of a surface to be lit 3 or two surfaces to be lit, respectively front and rear 3p. It has also been observed that in this situation even the number of LEDs used can be the same.

It is thus clear that the solution proposed according to the invention makes it possible to considerably reduce the overall dimensions of the lighting element, while at the same time guaranteeing homogeneous lighting of the surfaces to be lit (visible exposed surface).

The embodiment of the present invention has advantageously shown that the use of PVC for making the main body of the lighting element (any form or solution, including those previously described) allows for further reduction in the number of light sources (in the examples these are LED strips) to be used to light the surface to be lit 3. In fact, it has been possible to observe that this material gives the inner surface 4si of the body 4 a special ability to reflect light that makes it possible to halve the number of LEDs used, as it is possible to exploit the light reflection ability of the portion of the inner wall 4si opposite each light source (LED). It has also been noticed that said light reflection ability varies depending on the roughness of the surface 4si that, as will be shown below, is preferably processed using CNC machine tools, for example a CNC milling machine.

The substrate or main body can advantageously be made of a polymer, for example a polymer comprising PVC (polyvinyl chloride) or PMMA (polymethylmethacrylate) or an extruded or foam or cast material. Alternatively, the main body can advantageously be made of a resin comprising a polyurethane foam.

According to a further embodiment, the subject of the present invention is a lighting element in which said light emitting means comprise at least one fluorescent tube, or at least one incandescent lamp.

The inner side walls 4si can be at least partially vertical and/or oblique, depending on the light effects to be obtained.

According to a further preferred embodiment, the subject of the present invention is an element for signs in which the substrate or main body is constituted by a hollow body provided with a front opening (or groove) obtained by processing, preferably with a CNC milling machine, a sheet of material of the type mentioned above (a polymer, for example a polymer comprising PVC polyvinyl chloride or PMMA polymethylmethacrylate or an extruded or foam or cast material or a resin comprising foam polyurethane).

It is also clear that the lighting element can have any shape. In particular, Figure 4a shows an elevation view of a further embodiment of the element carried out according to the present invention. More particularly, the example of Figure 4a shows an illuminated road sign 1d constituted by one or more lighting elements arranged in such a way as to have a predefined shape (a triangle in the case at hand), wherein at least one of said lighting elements is made according to the preceding description, in particular with regard to Figure 3.

More particularly, the vertical illuminated road sign (STOP sign) is substantially constituted by a single lighting element made according to the above description regarding the embodiment shown in Figure 3a (illuminated on both sides) or in Figure 2a (illuminated on one side only).

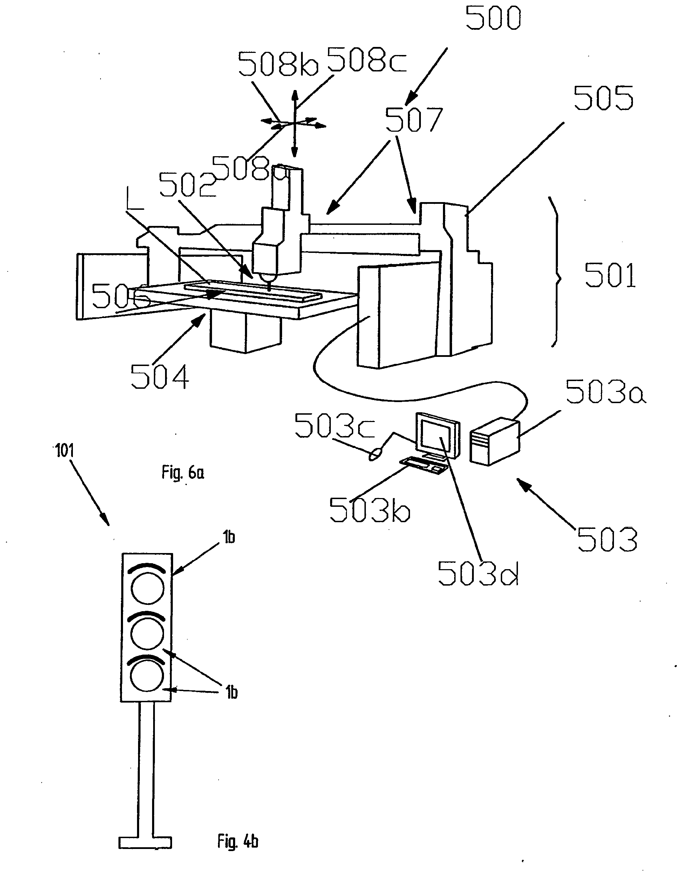

Figure 4b shows a set of traffic lights, indicated as a whole by 101 and comprising one or more lighting elements 1b arranged so as to obtain a predefined shape. More particularly, said elements 1b have a circular shape and each is in a different colour (green, yellow and red). In the particular embodiment of the invention illustrated herein, each one of said lighting elements is carried out according to one of the solutions described above, that is, is constituted by a lighting element made according to the above description regarding the embodiment shown in Figure 3a (illuminated on both sides) or in Figure 2a (illuminated on one side only).

According to another non-limiting embodiment of the invention, the lighting element is used to make an illuminated sign.

According to a further preferred embodiment of the invention, the sign consists of a single main body or substrate made from the materials described above and having the desired shape consisting, for example, of several letters or symbols. More generally, an illuminated sign may comprise one or more lighting elements arranged in such a way as to form a pattern having a predefined shape, at least one of said lighting elements being carried out according to the above description.

An example of embodiment of a sign of this type is schematically shown in the elevation view of Figure 5, where it is indicated as a whole by the numeral 100.

Regarding the procedure for making a lighting element, which is also the subject of the invention, it comprises the following operations: defining the shape of the lighting element desired (for example an a); cutting out the main body or the parts of the main body 4 of said lighting element from a sheet made of a polymer of the type described above, preferably using automatic machine tools; applying the light emitting means to the inner side walls of the main body (on part of said surface or on the entirety of said inner surface).

The process proposed may also comprise a further operation intended to make any grooves suited to house, for example, the above mentioned light emitting means, always preferably using automatic machine tools.

Figure 6a shows an example of a system, indicated as a whole by 500, suited to implement the process described above.

It comprises a machine tool 501 provided with means 502 for cutting out said substrate or main body or its parts, controlled by a control unit 503 through which the operator sets in advance the shape and the characteristics of the desired element and/or of its main body and/or of its parts.

In the preferred non-limiting embodiment of the invention represented herein the machine tool is a machine for removing material, and more precisely a milling machine.

This machine, in fact, makes it possible to process a sheet made from a polymer of the type described, in such a way as to cut out the sign element in the desired shape, as well as to make any through openings and/or grooves suited to house, for example, the light emitting means or the sheets of transparent material. More precisely, the milling machine comprises a frame 505 associated with said means for cutting out said element indicated as a whole by 502, arranged on top of a conveyor unit 504 on which there is a sheet L of the type mentioned above. The conveyor unit 504, which may or not belong to the system 500, is generally constituted by a conveyor belt that moves the sheet L along a rectilinear advance direction indicated with arrow 506 in the figure, in order to carry it towards the operating area of the above mentioned means 502.

The means 502 are associated with the frame 505 through moving means indicated as a whole by 507.

Said moving means 507 are suited to move the means 502 along three axes 508a, 508b and 508c at right angles to one another, in order to lower/raise the means 502 and move them along a horizontal plane in such a way as to be able to cut the sheet L and obtain a body substantially having any shape and provided with grooves, if any. More particularly, the moving means 507 comprise guide means provided with two moving rails, not visible, that define the above mentioned axes 508a, 508b and 508c, along which the tool carrier 502 moves.

As already explained, the movements of the various parts of the system 500 are controlled by a control unit 503, provided with operator interface means that allow the operating parameters of the system 500 and in particular of the machine 501 to be controlled and set as previously described.

In the particular embodiment of the invention represented herein, the control unit 503 comprises a computer 503a and the interface means comprise a keyboard 503b, a mouse 503c and a monitor 503d with which the operator can set the above mentioned processing parameters of the machine, like for example the type of material, the processing speed, the rotation speed of the tool, the diameter of the tool etc, as well as the desired shape of the element and/or sign using, for example, CAD or CNC systems.

In the preferred embodiment of the invention represented, the control unit 503 also comprises storage means including, for example, a disc unit, in which the operator can store the shape of an element or a sign carried out, with the corresponding operating parameters of the system and the machine, so that he/she can retrieve them, when desired, to make the same element and/or sign. The above clearly shows that, advantageously, the process proposed and the system described allow also an inexpert operator without manual skills to make complex lighting elements and/or signs having any shape and dimensions, by simply using the control unit, independently of his/her manual and/or technical skills.

It will be sufficient, in fact, to set the desired shape of the element using the above mentioned processing unit, if necessary indicating the depth and position of any grooves and/or through openings, or to retrieve the information regarding the processing parameters and the shapes of elements made in the past that is stored in the above mentioned storage means.

This advantageously makes it also possible to manufacture lighting elements and/or signs having identical and repeatable characteristics, and to determine their production costs.

The process and the system proposed can clearly be used to make all the types of lighting elements preferably for signs that are also the subject of the invention, as well as to make a sign of the type described above.

In practice, the operator, using a special software, for example a CAD or similar program installed in the processing unit 503, defines the profile desired for the main body 4 of the lighting element (or of a sign) through the interface means with which the processing unit 503 is provided.

Analogously, the operator also defines any grooves and/or openings to be created in the main body or its parts.

Successively the operator, once he has defined the shape of the lighting element (or the sign) and of its parts, starts the processing.

Thus, the processing unit provides for starting the conveyor unit that places the sheet L which was previously placed on it in line with the means 502 of the milling machine 501.

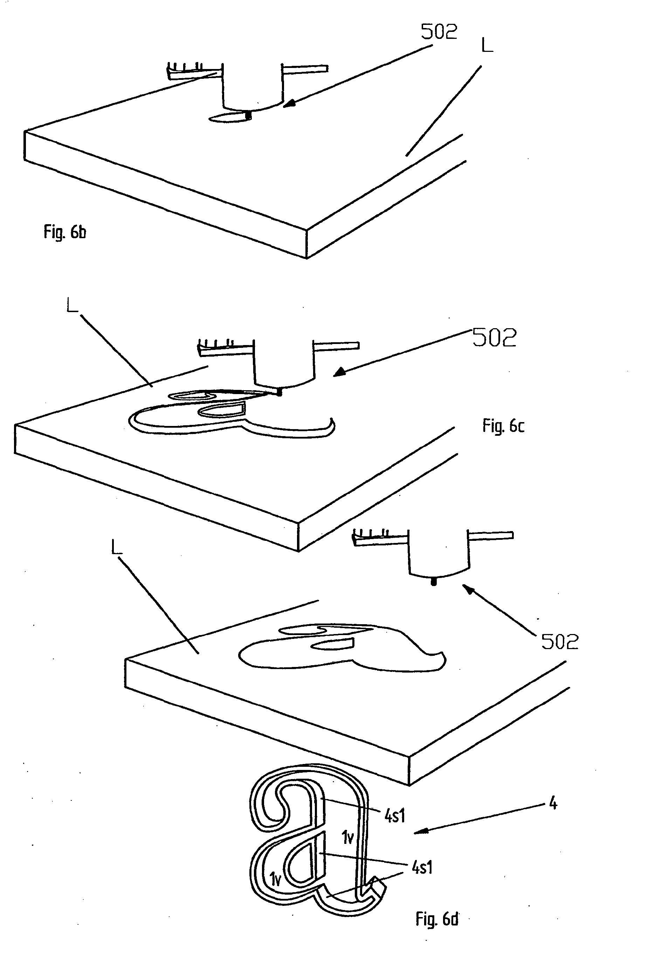

Then the processing unit activates the milling machine 501, that is, the means 502, thus setting the rotary tool or cutter rotating and moving it along the three axes 508a, 508b and 508c mentioned above, so that the tool covers a closed trajectory that reproduces the set perimeter of the substrate or main body 4 of the lighting element, until it comes off the sheet L, as shown by way of example in Figures 6b, 6c and 6d. Each of said figures, in fact, shows a processing stage in the making of the main body 4 of the lighting element of the type previously indicated by number 1a, starting from a sheet L and using the milling machine 501.

It should also be noted that if the operator intends to make grooves or through openings, these are preferably created before detaching the main body from the sheet with the means 502.

Said means 502, in fact, move along the three axes mentioned above and in particular along the vertical axis 508c. This advantageously makes it possible to check the depth to which the tool cuts into the substrate or main body in order to obtain grooves/seats of any shape and depth.

It is clear that in other embodiments the system may comprise specific means to make said grooves/seats, separate from the means suited to cut out the shape of the main body.

It should also be observed that in order to keep the sheet L still during processing the system may comprise means for locking the sheet including, for example, a suction system. Said suction system is suited to generate a vacuum on the plane where the sheet L is positioned during processing, and said vacuum maintains the plate in place.

Successively the operator takes the main body at the exit of the system and proceeds to carry out the assembly of other parts, like for example the light emitting means or the transparent sheets, as well as any finishing operations, like for example painting.

It should also be noted that in other embodiments the system may also comprise different machines that in any case must be such as to allow the desired element to be obtained starting from the above mentioned sheet, like for example a cutting machine.

While the present invention has been described with reference to the particular embodiments shown in the figures, it should be noted that the present invention is not limited to the specific embodiments illustrated and described herein; on the contrary, further variants of the embodiments described herein fall within the scope of the present invention, scope which is defined in the claims.

In particular, the proposed solution can be used also to make an illuminated furniture element comprising one or more lighting elements, at least one of which carried out according to the above description. For example, the furniture element may comprise a lamp or any object, even a household ornament or a chair or any other object.

It should also be noted that the proposed lighting element can be inserted also in a more complex body (like for example a piece of furniture, a lamp frame ecc.).

Even though the invention has been described making reference to the attached drawings, in the construction stage changes can be made that shall all be considered protected by the present patent, provided that they fall within the scope of the inventive concept expressed in the following claims.

It is also worth noting that where the characteristics mentioned in the following claims are followed by reference signs, these are used merely to improve the comprehensibility of the claim itself and shall not be seen as limiting its interpretation in any way.

It should also be underlined that all the parts can be replaced with other technically equivalent parts, that any material can be used, provided that it is compatible with the intended use, and that the various elements can have any size, depending on the needs.

## Claims

1. Luminous element (la, 1b, 1e, 1d) comprising at least one surface to be lit (3) and a substrate or main body (4) with a groove (1v) provided with side walls (4si) that extend in the direction of the thickness of said substrate or main body defining at least one cavity, **wherein** light emitting means (2) are arranged against one of said walls (4si) so as to emit light mostly towards the inside of said cavity (1v); said element further comprising light diffusion means (5) suited to direct light so that it exits from said cavity through said at least one surface to be lit (3), said light diffusion means being housed in said cavity; said light diffusion means (5) comprising a sheet (51) made of a transparent material; **characterized in that** said sheet is provided with cuts on at least one of its surfaces; and **in that** said surface cuts consist of a plurality of surface cuts constituted by rectilinear grooves; and **in that**, said surface cuts consist of a plurality of surface cuts constituted by rectilinear grooves that are parallel and orthogonal to one another.

2. Element according to claim 1, **characterized in that** said sheet (51) comprises methacrylate.

3. Element according to any of the preceding claims, **characterized in that** said substrate or main body (4) is made with a polymer.

4. Element according to claim 3), **characterized in that** said polymer comprises a polyurethane foam.

5. Element according to claim 3), **characterized in that** said polymer comprises polyvinyl chloride PVC or polymethylmethacrylate PMMA or is extruded or cast or foam.

6. Element according to any of the preceding claims, **characterized in that** said light emitting means (2) comprise at least one LED (8) and/or at least one fluorescent tube and/or at least one incandescent lamp.

7. Element according to any of the preceding claims, **characterized in that** at least one of said grooves extends over the entire thickness of the substrate or main body, in such a way as to create a through opening.

8. Element according to any of the claims from 1 to 7, **characterized in that** said substrate or main body comprises a rear wall (4p).

9. Element according to any of the claims from 1 to 8, **characterized in that** said element also comprises at least one second surface to be lit (3) substantially parallel to the other surface to be lit.

10. Element according to any of the preceding claims, **characterized in that** said at least one surface to be lit (3) belongs to a closing element (3, 3ca, 3cp) preferably consisting of a sheet made of opaline methacrylate.

11. Element according to any of the preceding claims, **characterized in that** at least one of said one or more walls is vertical and/or oblique.

12. Luminous sign comprising one or more luminous elements arranged in such a way as to form a pattern having a predefined shape, **characterized in that** at least one of said luminous elements is carried out according to any of the preceding claims.

13. Luminous road sign comprising one or more luminous elements arranged in such a way as to produce a pattern having a predefined appearance, **characterized in that** at least one of said luminous elements is carried out according to any of the claims from 1 to 11.

14. Luminous traffic light comprising one or more luminous elements arranged in such a way as to produce a pattern having a predefined appearance, **characterized in that** at least one of said luminous elements is carried out according to any of the claims from 1 to 11.

15. Luminous furniture element comprising one or more luminous elements, **characterized in that** at least one of said luminous elements is carried out according to any of the claims from 1 to 11.

## Patentansprüche

1. Leuchtelement (1a, 1b, 1c, 1d), wenigstens eine zu erleuchtende Oberfläche (3) und ein Substrat bzw. einen Hauptkörper (4) mit einer Kehle (1v) umfassend, der Seitenwände (4si) aufweist, welche sich in Richtung der Dicke des besagten Substrats oder Hauptkörpers erstrecken und wenigstens einen Hohlraum definieren, wobei Lichtemissionsmittel (2) gegen eine der besagten Wände (4si) angeordnet sind, um hauptsächlich zum Inneren des besagten Hohlraums (1v) hin Licht abzugeben; wobei das besagte Element des Weiteren Mittel zur Lichtstreuung (5) umfasst, die geeignet sind, das Licht derart auszurichten, dass es über die besagte, wenigstens eine zu erleuchtende Oberfläche (3) aus dem Hohlraum austritt, wobei die besagten Mittel zur Lichtstreuung in dem besagten Hohlraum positioniert sind; wobei die besagten Mittel zur Lichtstreuung (5) eine Scheibe (51) aus transparentem Material umfassen; **dadurch gekennzeichnet, dass** die besagte Scheibe an wenigstens einer ihrer Oberflächen Einschnitte aufweist; sowie dadurch, dass die besagten Oberflächeneinschnitte aus einer Vielzahl von Oberflächeneinschnitten bestehen, die aus geradlinigen Rillen bestehen; und dadurch, dass die besagten Oberflächeneinschnitte aus einer Vielzahl von Oberflächeneinschnitten bestehen, die aus geradlinigen, zueinander parallelen und rechtwinkligen Rillen bestehen.

2. Element gemäß Patentanspruch 1, **dadurch gekennzeichnet, dass** die besagte Scheibe (51) Methacrylat enthält.

3. Element gemäß eines jeden der vorstehenden Patentansprüche, **dadurch gekennzeichnet, dass** das besagte Substrat oder der besagte Hauptkörper (4) aus einem Polymer hergestellt ist.

4. Element gemäß Patentanspruch 3, **dadurch gekennzeichnet, dass** der besagte Polymer einen Polyurethanschaum enthält.

5. Element gemäß Patentanspruch 3, **dadurch gekennzeichnet, dass** der besagte Polymer Polyvinylchlorid (PVC) oder Polymethylmethacrylat (PMMA) enthält oder extrudiert oder gegossen oder geschäumt ist.

6. Element gemäß eines jeden der vorstehenden Patentansprüche, **dadurch gekennzeichnet, dass** die besagten Lichtemissionsmittel (2) wenigstens eine LED (8) und/oder wenigstens eine Leuchtstoffröhre und/oder wenigstens eine Glühlampe umfassen.

7. Element gemäß eines jeden der vorstehenden Patentansprüche, **dadurch gekennzeichnet, dass** wenigstens eine der besagten Rillen sich über die gesamte Dicke des Substrats oder Hauptkörpers erstrecken, so dass sie eine durchgehende Öffnung bilden.

8. Element gemäß eines jeden der Patentansprüche von 1 bis 7, **dadurch gekennzeichnet, dass** das besagte Substrat oder der besagte Hauptkörper eine Rückwand (4p) umfasst.

9. Element gemäß eines jeden der Patentansprüche von 1 bis 8, **dadurch gekennzeichnet, dass** das besagte Element außerdem wenigstens eine zweite, zu erleuchtende Oberfläche (3) umfasst, die im Wesentlichen parallel zu der anderen, zu erleuchtenden Oberfläche ist.

10. Element gemäß eines jeden der vorstehenden Patentansprüche, **dadurch gekennzeichnet, dass** die besagte, wenigstens eine zu erleuchtende Oberfläche (3) zu einem Verschlusselement (3, 3ca, 3cp) gehört, das vorzugsweise aus einer opalen Methacrylatplatte besteht.

11. Element gemäß eines jeden der vorstehenden Patentansprüche, **dadurch gekennzeichnet, dass** wenigstens eine der besagten einen oder mehreren Wände senkrecht und/oder schräg ist.

12. Leuchtschild mit einem oder mehreren Leuchtelementen, die derart angeordnet sind, dass sie ein Muster mit einer vorbestimmten Form erzeugen, **dadurch gekennzeichnet, dass** wenigstens eines der besagten Leuchtelemente gemäß eines jeden der vorstehenden Patentansprüche ausgeführt ist.

13. Beleuchtetes Verkehrsschild, ein oder mehrere Leuchtelemente umfassend, die derart angeordnet sind, dass sie ein Muster mit einem vorbestimmten Aussehen erzeugen, **dadurch gekennzeichnet, dass** wenigstens eines der besagten Leuchtelemente gemäß eines jeden der vorstehenden Patentansprüche von 1 bis 11 ausgeführt ist.

14. Verkehrs-Lichtampel, ein oder mehrere Leuchtelemente umfassend, die derart angeordnet sind, dass sie ein Muster mit einem vorbestimmten Aussehen erzeugen, **dadurch gekennzeichnet, dass** wenigstens eines der besagten Leuchtelemente gemäß eines jeden der vorstehenden Patentansprüche von 1 bis 11 ausgeführt ist.

15. Beleuchtetes Einrichtungselement, ein oder mehrere Leuchtelemente umfassend, **dadurch gekennzeichnet, dass** wenigstens eines der besagten Leuchtelemente gemäß eines jeden der vorstehenden Patentansprüche von 1 bis 11 ausgeführt ist.

## Revendications

1. Elément lumineux (la, 1b, 1e, 1d) comprenant au moins une surface à éclairer (3) et un substrat ou corps principal (4) avec une rainure (1v) ayant des parois latérales (4si) s'étendant dans la direction de l'épaisseur dudit substrat ou corps principal définissant au moins une cavité, où des moyens d'émission de la lumière (2) sont disposés contre une desdites parois (4si) de façon à émettre de la lumière principalement vers l'intérieur de ladite cavité (1v) ; ledit élément comprenant en outre des moyens de diffusion de la lumière (5) aptes à orienter la lumière de manière à ce qu'elle sorte de ladite cavité à travers ladite au moins une surface à éclairer (3), lesdits moyens de diffusion de la lumière étant logés dans ladite cavité ; lesdits moyens de diffusion de la lumière (5) comprenant une plaque (51) réalisée en un matériau transparent ; **caractérisé en ce que** ladite plaque présente des incisions sur au moins une de ses surfaces ; et **en ce que** lesdites incisions superficielles sont constituées par une pluralité d'incisions superficielles constituées de rainures rectilignes ; et **en ce que** lesdites incisions superficielles sont constituées d'une pluralité d'incisions superficielles constituées de rainures rectilignes qui sont parallèles et orthogonales entre elles.

2. Elément selon la revendication 1, **caractérisé en ce que** ladite plaque (51)
comprend du méthacrylate.

3. Elément selon l'une quelconque des revendications précédentes, **caractérisé**
**en ce que** ledit substrat ou corps principal (4) est réalisé avec un polymère.

4. Elément selon la revendication 3, **caractérisé en ce que** ledit polymère
comprend une mousse de polyuréthanne.

5. Elément selon la revendication 3, **caractérisé en ce que** ledit polymère
comprend du chlorure de polyvinyle (PVC) ou polyméthacrylate de méthyle (PMMA) ou est extrudé ou coulé ou expansé.

6. Elément selon l'une quelconque des revendications précédentes, **caractérisé**
**en ce que** lesdits moyens d'émission de la lumière (2) comprennent au moins une DEL (8) et/ou au moins un tuyau fluorescent et/ou au moins une lampe à incandescence.

7. Elément selon l'une quelconque des revendications précédentes, **caractérisé**
**en ce qu'**au moins l'une desdites rainures s'étend pour toute l'épaisseur du substrat ou corps principal, de façon à réaliser une ouverture passante.

8. Elément selon l'une quelconque des revendications de 1 à 7, **caractérisé en ce**
**que** ledit substrat ou corps principal comprend une paroi arrière (4p).

9. Elément selon l'une quelconque des revendications de 1 à 8, **caractérisé en ce**
**que** ledit élément comprend en outre une deuxième surface à éclairer (3) essentiellement parallèle à l'autre surface à éclairer.

10. Elément selon l'une quelconque des revendications précédentes, **caractérisé**
**en ce que** ladite au moins une surface à éclairer (3) appartient à un élément de fermeture (3, 3ca, 3cp) préférablement constitué d'une plaque en méthacrylate opalin.

11. Elément selon l'une quelconque des revendications précédentes, **caractérisé**
**en ce qu**'au moins une desdites une ou plusieurs parois est verticale et/ou oblique.

12. Enseigne lumineuse comprenant un ou plusieurs éléments lumineux disposés
de façon à réaliser un dessin ayant une forme prédéfinie, **caractérisé en ce qu**'au moins un desdits éléments lumineux est réalisé selon l'une quelconque des revendications précédentes.

13. Signalisation lumineuse routière comprenant un ou plusieurs éléments
lumineux disposés de façon à réaliser un dessin ayant un aspect prédéfini, **caractérisé en ce qu**'au moins un desdits éléments lumineux est réalisé selon l'une quelconque des revendications de 1 à 11.

14. Feu lumineux comprenant un ou plusieurs éléments lumineux disposés de
façon à réaliser un dessin ayant un aspect prédéfini, **caractérisé en ce qu**'au moins un desdits éléments lumineux est réalisé selon l'une quelconque des revendications de 1 à 11.

15. Elément d'ameublement lumineux comprenant un ou plusieurs éléments
lumineux, **caractérisé en ce qu**'au moins un desdits éléments lumineux est réalisé selon l'une quelconque des revendications de 1 à 11.
